# EUROPEAN PATENT APPLICATION

(11) **EP 3 035 598 A1**
(43) Date of publication of application: **22.06.2016**
(21) Application number: 15189795.6
(22) Date of filing: 14.10.2015
(51) Int. Cl.: H04L 12/24, H04L 12/18, H04L 12/721

(54) **CONTROL TECHNIQUE FOR DATA DISTRIBUTION**

(30) Priority: 18.12.2014 JP 2014256051
(71) Applicant: FUJITSU LIMITED, Kawasaki-shi, Kanagawa 211-8588 (JP)
(72) Inventor: KIKUCHI, Satoshi, Kawasaki-shi, Kanagawa 211-8588 (JP); HASHIMOTO, Tsuyohi, Kawasaki-shi,, Kanagawa 211-8588 (JP)
(74) Representative: Ward, James Norman

(57) **Abstract**

In a control method of an information processing apparatus, nodes of data distribution destinations among plural nodes that are connected with a network, which includes plural network switches that have a function to dynamically set an output destination port of broadcast data are included in a first domain. A transfer setting of packets relating to broadcast to each node included in the first domain for network switches that belong to routes to the each node included in the first domain is performed. Then, the packets relating to the broadcast to the each node included in the first domain are broadcast.

## Description

This invention relates to an information processing apparatus, a control method of the information processing apparatus and a control program of the information processing apparatus.

Typically, a cluster-type computer system that includes plural nodes connected through a communication network includes following nodes. In other words, the plural nodes include computing nodes that function as a computing resources and a management node that performs management of the computing nodes. The management of the computing nodes includes management of jobs executed by the computing nodes. Moreover, the communication network includes network switches.

In a large-scale cluster-type computer system that includes several thousands or more computing nodes, there are a lot of cases where the number of computing nodes that are managed by one management node is reduced by logically layering nodes to reduce management loads. However, in case where a file is distributed in such a system, there are following problems. 1) When hierarchically repeating the file distribution for the entire cluster by peer-to-peer communication (i.e. unicast), the loads of upper-level nodes that are transmission sources become high, and as a result, delay of the file distribution for the entire system occurs. Typically, when the broadcast or multicast, which is broad data transmission, is utilized instead of the unicast, the transfer loads are reduced because packets are copied in the network switches.

2) In case of the multicast, it is possible to transfer packets over the subnet because the routing is possible, and it is possible to dynamically perform participation or secession to or from the multicast group. Therefore, it is possible to dynamically change a range of the multicast group, and then, it is possible to perform efficient transfer. However, the lower-level nodes that are transfer destinations do not have any information regarding which multicast group its own node should belong to, at the beginning of the cluster construction. Then, it is impossible to notify the network switches in the communication network of information regarding which node participates in which multicast group. On the other hand, if the multicast group in which each lower-level node participates is determined in advance, it is impossible to dynamically change the group flexibly after all, because the multicast group is fixed, and the range of the file distribution is fixed. As a result, it is impossible to efficiently distribute the file.

3) In case of the broadcast, because the routing cannot be performed, i.e. it is impossible to transfer packets over the subnet, the broadcast cannot be used for the system configuration that is divided into plural subnets. Moreover, the range of the subnet is fixed by a hardware setting in the network switch.

Moreover, in an initial construction job of the large-scale cluster-type computer system, following problems also occur. 4) Because of abnormality of power supply control or network, which is caused by any initial defect or human setting mistake of the hardware, the construction processing does not proceed, and a state of a wasteful time-out waiting, which is caused by this, becomes long. 5) Moreover, it is impossible to utilize the cluster-type computer system until the entire system construction is completed.

Patent Document 1: Japanese Laid-open Patent Publication No. 2000-31998

Patent Document 2: Japanese Patent No. 4819956

Patent Document 3: Japanese Laid-open Patent Publication No. 2005-228313

Therefore, as one aspect, an object of this invention is to provide one technique for efficiently conducting data distribution.

An information processing apparatus relating to this invention includes: a memory; and a processor configured to use the memory and execute a process, the process including: (A) including, in a first domain, nodes of data distribution destinations among plural nodes that are connected with a network, which includes plural network switches that have a function to dynamically set an output destination port of broadcast data; (B) performing a transfer setting of packets relating to broadcast to each node included in the first domain for network switches that belong to routes to the each node included in the first domain; and (C) broadcasting the packets relating to the broadcast to the each node included in the first domain.

Reference will now be made, by way of example, to the accompanying Drawings, in which:
FIG. 1 is a diagram depicting an outline of a system relating to this embodiment;
FIG. 2 is a diagram depicting a configuration example of a network switch;
FIG. 3 is a diagram depicting a configuration example of a management node;
FIG. 4 is a diagram representing data for domains to which computing nodes belongs;
FIG. 5 is a diagram depicting an example of data regarding a communication network;
FIG. 6 is a diagram depicting an example of data regarding the communication network;
FIG. 7 is a diagram depicting an example of data regarding the communication network;
FIG. 8 is a diagram depicting an example of data regarding the communication network;
FIG. 9 is a diagram depicting an example of data regarding the communication network;
FIG. 10 is adiagramdepictingaprocessing flowof a processing by the management node;
FIG. 11 is adiagramdepictingaprocessing flowof a processing by the computing nodes; and
FIG. 12 is a functional block diagram of a computer.

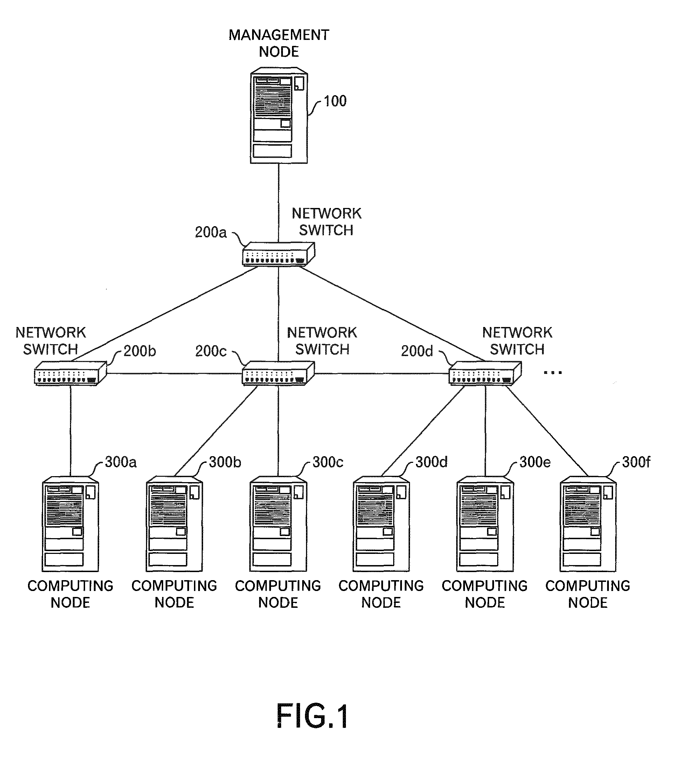

FIG. 1 illustrates an outline of a computer system relating to this embodiment. As illustrated in FIG. 1, plural computing nodes 300a to 300f (Thenumberof computing nodes is arbitrary.) are connected to a management node 100 through plural network switches 200a to 200d (The number of network switches is also arbitrary.) that function as a communication network.

The computing nodes 300a to 300f are the same as the conventional computing nodes, however, in this embodiment, assume that an Operating System (OS) image for constructing the computing nodes 300a to 300f is distributed to the computing nodes 300a to 300f.

In this embodiment, the OS image is assumed to be an image file of disks which the OS has been installed and common settings have already been performed. It is not limited to a single file and there's a case where plural image files are included, and in such a case, in order to construct the nodes, those plural image files are distributed.

The network switches 200a to 200d are networks switches that followOpenFlow. OpenFlow is a technique for realizing Software Defined Networking (SDN), which is defined by Open Networking Foundation. OpenFlow Switch Specification is incorporated herein by reference. By utilizing OpenFlow, it is possible to change an operation of each network switch from an OpenFlow controller that will be explained later. More specifically, it is possible to dynamically change broadcast domains by using a function "switching with a slice function". The slice is an area generated by logically dividing one physical network, and is equivalent to a function of Virtual Local Area Network (VLAN) . However, they differ inapoint that the slice canbe dynamically changed. This embodiment will be explained assuming that the slice is the same as the domain. In addition, plural network switches that are compatible with OpenFlow are connected with each other to integrate them into one switch group. Thereby, the path can be flexibly change within the switch group.

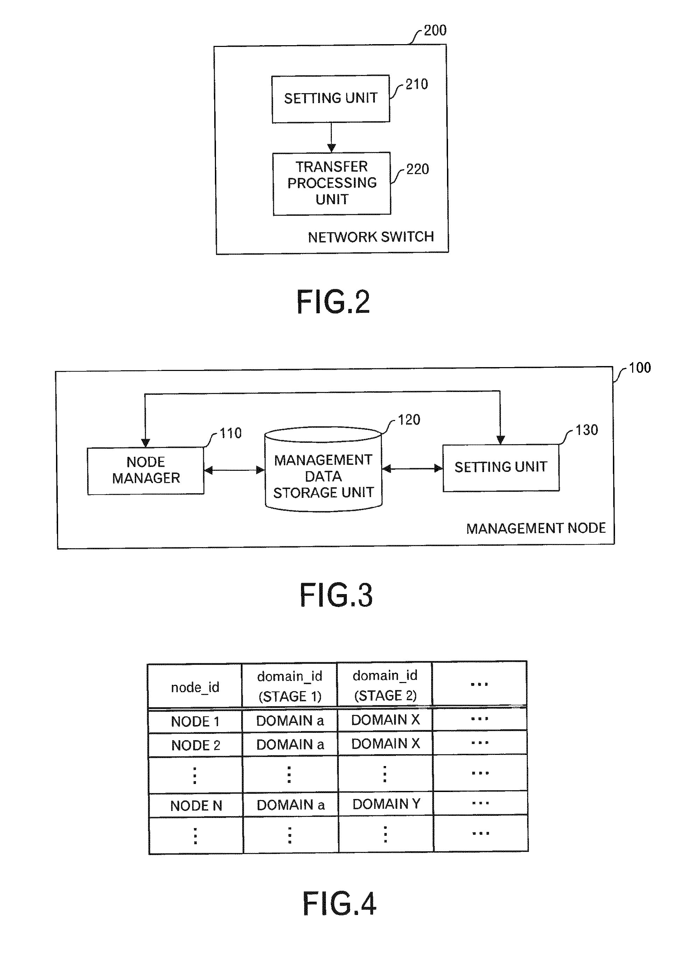

FIG. 2 illustrates a functional block configuration example of portions of the network switch 200, which relate to this embodiment. As illustrated in FIG. 2, the network switch 200 has a transfer processing unit 220 to execute a transfer processing of packets and a setting unit 210 to perform settings for a transfer control to the transfer processing unit 220 according to an instruction from the OpenFlow controller.

The management node 100 is an installer node for installing the OS image into the computing nodes 300a to 300f, and has a function of the OpenFlow controller. The OpenFlow controller performs a setting with respect to the transfer control of the packets for the network switches that are compatible with OpenFlow. The management node in which the installer node and the OpenFlow controller are integrated will be explained, however, they may be separated.

FIG. 3 illustrates a functional configuration example of the management node 100. The management node 100 has a node manager 110, a management data storage unit 120 and a setting unit 130 that corresponds to the OpenFlow controller. The node manager 110 performs a processing to manage a domain to which each of computing nodes 300a to 300f belongs. The setting unit 130 performs a processing to perform settings for the network switches 200a to 200d that are compatible with OpenFlow and additional processing. The management data storage unit 120 stores data of domains to which the network switches 200a to 200d belong, data concerning a configuration of the communication network and the like.

FIGs. 4 to 9 illustrate examples of data stored in the management data storage unit 120. FIG. 4 illustrates an example of data of domains to which the computing nodes 300a to 300f belong. In this embodiment, the OS image is distributed by initially including computing nodes 300 to which the OS image has to be distributed in a domain "a" (stage 1). Then, by including computing nodes 300 to which the OS image has been installed within a predetermined period, for example, in a domain "X", an actual operation begins (stage 2) . However, computing nodes 300 to which the OS image has not been installed within the predetermined period, for example, are included in a domain "Y" without using them for the actual operation, because additional countermeasures are performed for them. When shifting to the actual operation, the domain may be divided into each subnet. In addition, when a failure or the like is detected after shifting to the actual operation, the computing node in which the failure occurred may be included in another domain.

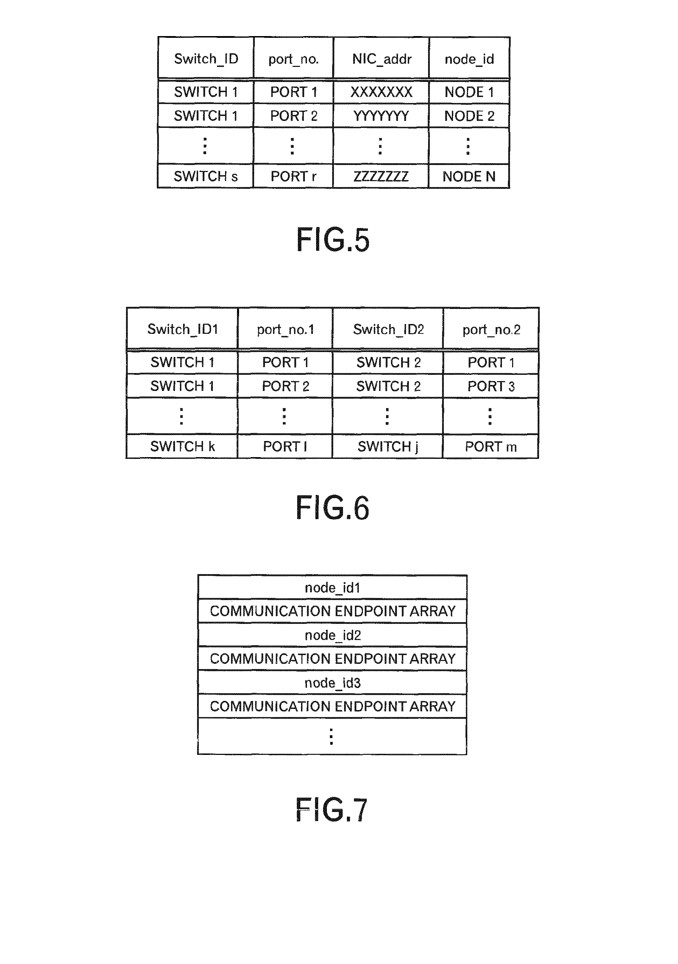

Moreover, in this embodiment, data as illustrated in FIGs. 5 and 6 for the communication network is prepared in advance. FIG. 5 illustrates an example of data concerning ports of the network switches 200 connected with individual computing nodes 300 . For example, it is represented that Node 1 (whose address (addr) of a network interface card (NIC) is XXXXXXX) is connected with a port 1 of a switch 1.

In addition, FIG. 6 illustrates an example of a connection relationship between switches. In an example of FIG. 6, for each line, a state of one connection line is represented, and a port of one switch is correlated with a port of the other switch.

Data as illustrated in FIGs. 7 to 9 is generated in advance from such data. FIG. 7 illustrates an example in which a communication endpoint array that is an array for the network switches 200 disposed on a route to the management node 100, for each computing node 300.

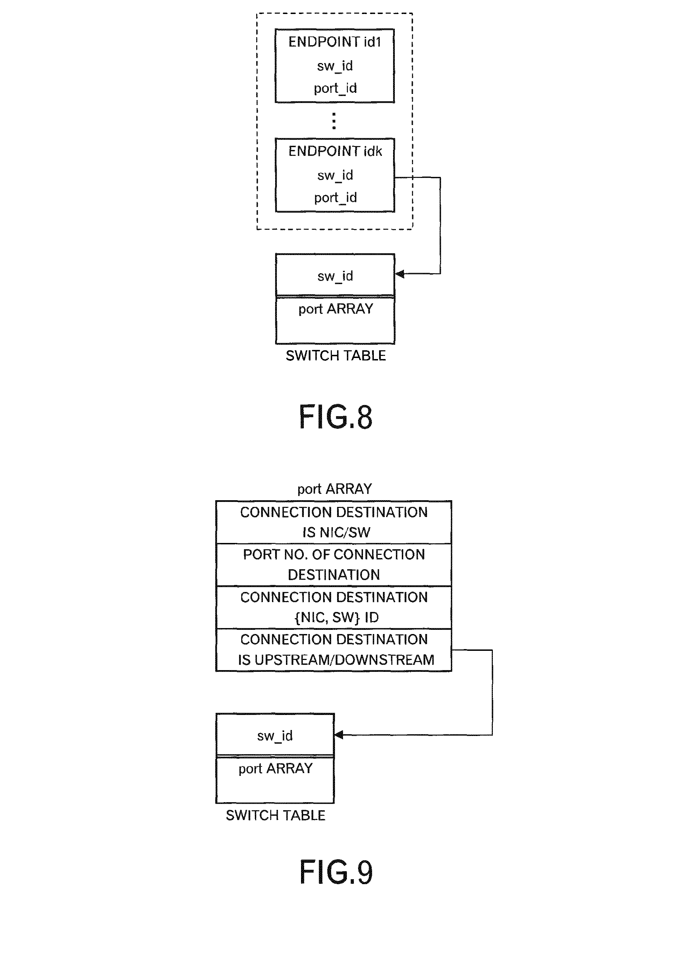

As illustrated in FIG. 8, the communication endpoint array includes, for each network switch 200, an identifier (id) of the endpoint, a port number (port_id) of a connection destination switch and a pointer to a switch table of the connection destination switch. The switch table includes a switch ID (sw_id) and a port array.

As illustrated in FIG. 9, the port array of the switch table includes a flag representing whether the connection destination is a NIC or a switch (SW), a port number of the connection destination, an ID of the connection destination NIC or SW and a flag representing whether the connection destination is an upstream equipment or a downstream equipment. When the connection destination is a switch, a pointer to the switch table of the connection destination switch is included instead of the switch ID of the connection destination switch.

By holding such data, it is possible to perform a setting so as to transfer the OS image from the management node 100 to individual network switches 200 on routes to the computing nodes 300 to which the OS image has to be distributed, when the OS image is distributed.

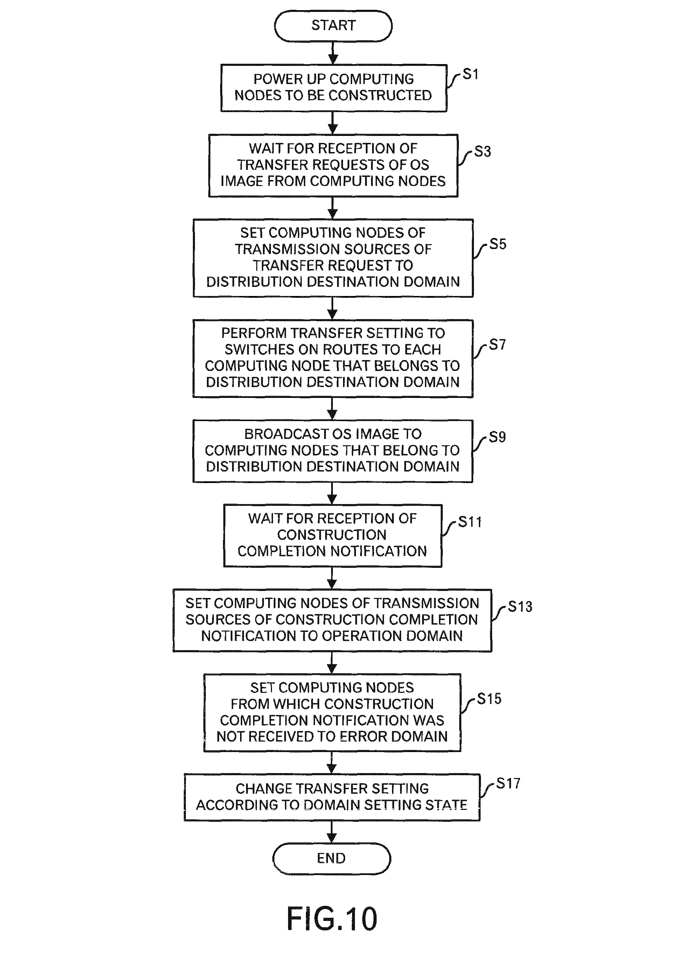

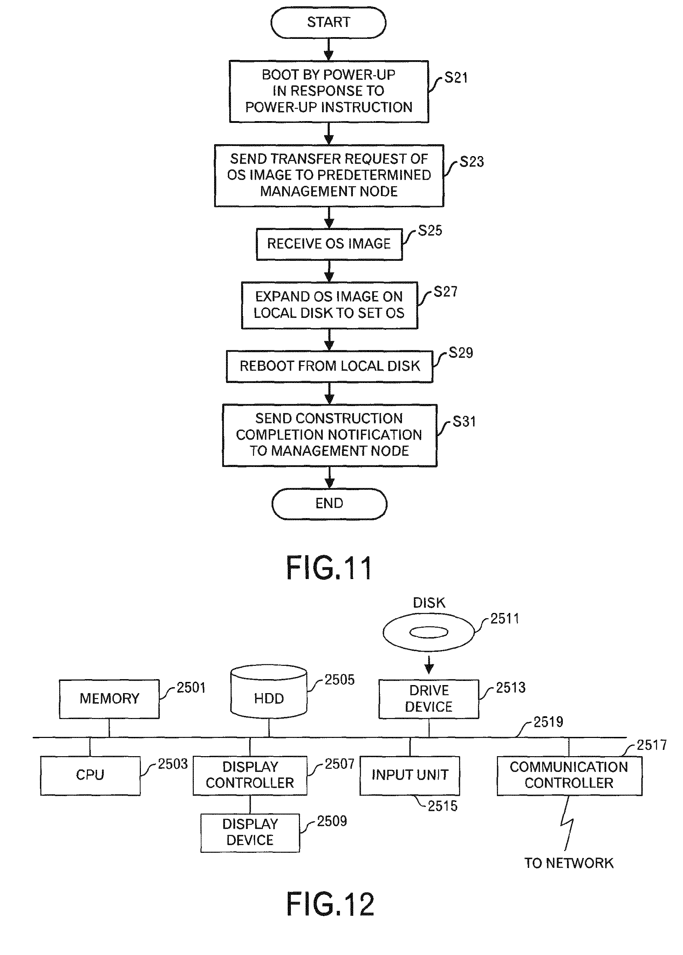

Next, operation contents of the system relating to this embodiment will be explained by using FIGs. 10 and 11.

Firstly, the node manager 110 causes the computing nodes 300 (i.e. nodes used for the system), which are listed up in a list as illustrated in FIG. 4, for example, to power up through the communication network (FIG. 10: step S1).

After that, the node manager 110 waits for reception of a transfer request of the OS image from the computing nodes 300 (step S3) . The operation contents in each computing node 3 00 will be explained in detail later, however, in response to a power-up instruction from the node manager 110, each of the computing nodes 300 boots up, and furthermore transmits the transfer request of the OS image to the management node 100.

Then, when the node manager 110 receives the transfer request, the node manager 110 performs a setting so as to include the transmission source computing node 300 of the transfer request in a distribution destination domain of the OS image (step S5). In an example of FIG. 4, as the stage 1, the transmission source computing nodes 300 of the transfer request are included in the domain "a". Because the time difference may occur among receptions of the transfer requests, the setting of the distribution destination domain may be performed plural times. For example, after the transfer requests have been received from a predetermined number of computing nodes 300 or after a predetermined time elapsed, the computing nodes 300 whose transfer requests were received are included ina first distribution destination domain for the first distribution, and the computing nodes 300 whose transfer requests are received after that are included in a second distribution destination domain.

The node manager 110 requests the setting unit 130 to perform a setting processing for the network switches 200 on the routes to individual computing nodes 300 that belong to the distribution destination domain.

Then, the setting unit 130 uses data illustrated, for example, in FIGs. 7 to 9 to identify the network switches 200 that appear on the routes to individual computing nodes 300 that belong to the distribution destination domain, and causes the identified network switches 200 to perform a transfer setting for transferring packets of the OS image to be del ivered f rom the management node 100 to individual computing nodes 300 that belong to the distribution destination domain (step S7). This processing is performed by using the function of OpenFlow. The network switches 200 that appear on the routes to the individual computing nodes 300 that belong to the distribution destination domain are identified from the communication endpoint array, for example. In response to this, the setting unit 210 of the network switch 200 performs a setting for the transfer processing unit 220 so as to output packets of the OS image from the management node 100 to a port connected directly or indirectly to the computing node 300 that belongs to the distribution destination domain.

Then, the node manager 110 broadcasts the OS image to the computing nodes 300 that belong to the distribution destination domain (step S9) . The network switches 200 in the communication network copy and transfer the OS image according to the setting.

After that, the node manager 110 waits for receptions of construction completion notifications from the computing nodes 300 that belong to the distribution destination domain (step S11). The operation contents of the computing node 300 that belongs to the distribution destination domain will be explained in detail later. However, when the computing node 300 receives the OS image, the computing node 300 installs the OS image, and after the completion of the installation, the computing node 300 transmits the construction completion notification to the management node 100.

Then, when the node manager 110 receives the construction completion notification from the computing node 300, the node manager 110 performs a setting so as to include the transmission source computing node 300 of the construction completion notification in an operation domain (step S13) . For example, in the example of FIG. 4, in stage 2, a setting is performed so as to include the transmission sources computing node 300 of the construction completionnotification in the domain "X".

Furthermore, the node manager 110 performs a setting so as to include nodes from which the construction completion notification is not received until a predetermined period elapsed into an error domain (step S15) . For example, in the example of FIG. 4, in the stage 2, a setting is performed so as to include the computing nodes 300 from which the construction completion notification is not received in the domain "Y". A setting may be performed so as to include computing nodes 300 from which the transfer request is not received up to this stage in the error domain. After that, the node manager 110 instructs the setting unit 130 to perform a setting so as to enable the computing nodes 300 included in the operation domain to communicate with each other.

With this processing, it becomes possible not to transmit packets to the computing nodes 300 to which the retransfer of the OS image is unnecessary by limiting a range of the computing nodes 300 at the retry, in other words, the retransfer of the OS image.

Then, the setting unit 130 causes the network switches 200 to change the transfer setting of the packets according to the domain setting (step S17). This processing is also performed by using the function of OpenFlow.

For example, the setting unit 210 of the network switch 200 performs setting change for the transfer processing unit 220 so as to enable the computing nodes 300 that belong to the operation domain to communicate with each other.

The operation domain may be divided into some subnet. In such a case, the setting of the step S17 may be performed according to data regarding the subnets to which the individual computing nodes 300 belong, for example.

With this configuration, by including the computing nodes 300 in which the construction has been completed into the operation domain, the partial operation is enabled to start, and by including the computing nodes 300 in which the construction is not completed into the error domain to limit the range for which the OS image is retransmitted, transmission of unnecessary packets is avoided.

Although it is designed to send a transfer request initially from the computing node 300, however, the OS image may be broadcast to the node into which the OS image has to be installed without waiting for the transfer request.

Here, processing details of each computing node 300 will be explained by using FIG. 11.

Firstly, the computing node 300 powers up in response to the power-up instruction from the management node 100, andperformsboot-up of Basic Input/Output System (BIOS) (FIG. 11: step S21) . After that, the computing node 300 transmits a transfer request of the OS image to a preset management node 100 (step S23).

Then, the computing node 300 receives the OS image from the management node 100 (step S25), and expands the OS image on a local disk, and performs settings of the OS (step S27).

After that, the computing node 300 shuts down and reboots up from the local disk (step S29).

After the reboot, the computing node 300 transmits the construction completion notification to the management node 100 (step S31).

By performing the aforementioned processing, the construction of the computing nodes 300 is automatically performed.

At above configuration, it is possible to dynamically change broadcast domains by OpenFlow according to progress of the cluster construction processing and heighten the efficiency of the data distribution used for the large-scale system construction. In the broadcast unlike the unicast, the network switches transfer the packets to destination nodes by copy (i.e. flooding), so the transfer loads of the upper-level nodes can be reduced. Moreover, because the data distribution range can be changed dynamically instead of the prior setting, it is possible to efficiently transfer packets by changing the range to the optimum range at that time. In addition to the transfer efficiency, because the construction is performed for the computing nodes from which the transfer request was transmitted and the operation starts from the nodes in which the construction has been completed, it is possible to shift the system operation phase to the next phase without waiting for the construction completion of the entire system.

When the broadcast like this embodiment is performed, the data error and packet missing are not always recovered. Therefore, if necessary, the receiving side of the broadcast message performs data consistency confirmation and the recovery processing by error correction codes transmitted as redundant data.

Because the recovery by retransmitting data when the data error or the packet missing occurs causes the large extension of the processing time, it is advantageous that a method for transmitting data with redundant data (i.e. error correction codes) (Forward Error Correction: FEC) is used, especially, in the large-scale system.

Moreover, when we assume that only one management node 100 receives a message (or a packet) from each of all computing nodes 300 through one-to-one communication, the processing loads for receiving responses become large in the large-scale system. Furthermore, even when we assume that a protocol is employed in which a message from the computing nodes 300 of the data distribution destination is waited for before the broadcast messages are transmitted, a similar problem may occur if the management node 100 concentratedly receives the message.

In order to avoid such a problem, the computing nodes 300 may be logically layered as a tree to transmit messages from the computing nodes 300 to the management node 100 after aggregating messages in the computing nodes 300 in the intermediate layers.

Although the embodiments of this invention were explained above, this invention is not limited to those. For example, the functional block configurations illustrated in FIGs. 2 and 3 are mere examples, and may not correspond to a program module configuration.

In addition, as for the processing flow, as long as the processing results do not change, the turns of steps may be exchanged and plural steps may be executed in parallel.

Furthermore, in the aforementioned explanation, an example of the OS image distribution was described, however, the distribution of other data may be performed in a similar manner.

In addition, the aforementioned management node 100 and computing nodes 300 are computer devices as shown in FIG. 12. That is, a memory 2501 (storage device), a CPU 2503 (processor), a hard disk drive (HDD) 2505, a display controller 2507 connected to a display device 2509, a drive device 2513 for a removable disk 2511, an input unit 2515, and a communication controller 2517 for connection with a network are connected through a bus 2519 as shown in FIG. 12. An operating system (OS) and an application program for carrying out the foregoing processing in the embodiment, are stored in the HDD 2505, and when executed by the CPU 2503, they are read out from the HDD 2505 to the memory 2501. As the need arises, the CPU 2503 controls the display controller 2507, the communication controller 2517, and the drive device 2513, and causes them to perform necessary operations. Besides, intermediate processing data is stored in the memory 2501, and if necessary, it is stored in the HDD 2505. In this embodiment of this technique, the application program to realize the aforementioned functions is stored in the computer-readable, non-transitory removable disk 2511 and distributed, and then it is installed into the HDD 2505 from the drive device 2513. It may be installed into the HDD 2505 via the network such as the Internet and the communication controller 2517. In the computer as stated above, the hardware such as the CPU 2503 and the memory 2501, the OS and the necessary application programs systematically cooperate with each other, so that various functions as described above in details are realized.

Furthermore, the network switches 200 may be implemented by software for the aforementioned processing and the computer apparatus illustrated in FIG. 12, which includes plural communication controller 2517.

The aforementioned embodiments are outlined as follows:

A data distribution method relating to the embodiments includes (A) including, in a first domain, nodes of data distribution destinations among plural nodes that are connected with a network, which includes plural network switches that have a function to dynamically set an output destination port of broadcast data; (B) performing a transfer setting of packets relating to broadcast to each node included in the first domain for network switches that belong to routes to the each node included in the first domain; and (C) broadcasting the packets relating to the broadcast to the each node included in the first domain.

By employing the aforementioned network switches, the broadcast destinations of data can be flexibly set. Therefore, it becomes possible to perform efficient data distribution.

This data distribution method may further include (D) including, in a second domain that is different from the first domain, nodes that returned notification representing that the packets relating to the broadcast were received among nodes included in the first domain; and (E) performing a setting change for network switches relating to each node included in the second domain. With this processing, the node included in the second domain can be shifted to a next processing phase.

Furthermore, this data distribution method may further include (F) including, in a third domain that is different from the second domain, nodes that did not return the notification representing that the packets relating to the broadcast were received among the nodes included in the first domain. With this processing, it is possible to redistribute data to nodes that failed to receive data without influencing nodes included in the second domain.

Moreover, this data distribution method may further include (G) identifying nodes that performed data request among the plurality of nodes, as the nodes of the data distribution destinations. With this processing, it is possible to narrow the data distribution destinations.

Incidentally, it is possible to create a program causing a computer or processor to execute the aforementioned processing, and such a program is stored in a computer readable storage medium or storage device such as a flexible disk, CD-ROM, DVD-ROM, magneto-optic disk, a semiconductor memory such as ROM (Read Only Memory), and hard disk. In addition, the intermediate processing result is temporarily stored in a storage device such as a main memory or the like.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present inventions have been described in detail, it should be understood that the various changes, substitutions, and alterations could be made hereto without departing from the spirit and scope of the invention.

## Claims

1. An information processing apparatus, comprising:
a first management unit that includes, in a first domain, nodes of data distribution destinations among a plurality of nodes that are connected with a network, which includes a plurality of network switches that have a function to dynamically set an output destination port of broadcast data;
a first setting unit that performs a transfer setting of packets relating to broadcast to each node included in the first domain for network switches that belong to routes to the each node included in the first domain; and
a transmission unit that broadcasts the packets relating to the broadcast to the each node included in the first domain.

2. The information processing apparatus as set forth in claim 1, further comprising:
a second management unit that includes, in a second domain that is different from the first domain, nodes that returned notification representing that the packets relating to the broadcast were received among nodes included in the first domain; and
a second setting unit that changes a setting of network switches relating to each node included in the second domain.

3. The information processing apparatus as set forth in claim 2, wherein the process further comprises:
a third management unit that includes, in a third domain that is different from the second domain, nodes that did not return the notification representing that the packets relating to the broadcast were received among the nodes included in the first domain.

4. The information processing apparatus as set forth in any one of claims 1 to 3, wherein the process further comprises:
an identifying unit that identifies nodes that performed data request among the plurality of nodes, as the nodes of the data distribution destinations.

5. A control method, comprising:
including, in a first domain, nodes of data distribution destinations among a plurality of nodes that are connected with a network, which includes a plurality of network switches that have a function to dynamically set an output destination port of broadcast data;
performing a transfer setting of packets relating to broadcast to each node included in the first domain for network switches that belong to routes to the each node included in the first domain; and
broadcasting the packets relating to the broadcast to the each node included in the first domain.

6. The control method as set forth in claim 5, further comprising:
including, in a second domain that is different from the first domain, nodes that returnednotif ication representing that the packets relating to the broadcast were received among nodes included in the first domain; and
changing a setting of network switches relating to each node included in the second domain.

7. The control method as set forth in claim 6, further comprising:
including, in a third domain that is different from the second domain, nodes that did not return the notification representing that the packets relating to the broadcast were received among the nodes included in the first domain.

8. The control method as set forth in claim 5, further comprising:
identifying nodes that performed data request among the plurality of nodes, as the nodes of the data distribution destinations.

9. A program for causing a computer to execute the control method as set forth in any one of claims 5 to 8.
